# EUROPEAN PATENT SPECIFICATION

(11) **EP 2 908 493 B1**
(45) Date of publication and mention of the grant of the patent: **01.08.2018**
(21) Application number: 15152409.7
(22) Date of filing: 23.01.2015
(51) Int. Cl.: H04L 29/06, H04L 9/08, H04W 12/04

(54) **SECURE COMMUNICATION SYSTEMS**
SYSTEM ZUR SICHEREN KOMMUNIKATION
SYSTÈMES DE COMMUNICATION SÉCURISÉS

(30) Priority: 24.01.2014 GB 201401188
(43) Date of publication of application: 19.08.2015
(73) Proprietor: Actus Mobile Solutions Limited, Bray (IE); Culyer, Robert, Fleet, Hampshire GU51 1BW (GB); Breen, Raymond, Bray (IE); Stafford, Eamon, Bray (IE)
(72) Inventor: Culyer, Robert, Hampshire, GU51 1BW (GB); Breen, Raymond, Co. Wicklow (IE); Stafford, Eamon, Co. Wicklow (IE)
(74) Representative: Barker Brettell LLP

(56) References cited:
- WO-A1-99/21321
- US-B1- 6 230 269
- US-B1- 8 477 941

## Description

### Field of the Invention

The field of the invention relates to the security of payment transactions and transfer of sensitive data over public networks such as WiFi and the Internet from devices such as personal computers, tablets and mobile phones, and the authentication/integrity checking of such transactions.

### Background of the Invention

Historically secure communication has been performed using HTTPS which has a number of drawbacks. One drawback is although the claim is that with HTTPS data is protected against surveillance or man-in-the-middle attacks it is actually not too technically challenging to implement a smart proxy to get inside the secure tunnel formed by HTTPS thus defeating the security. Historically authentication has been assumed by passing credentials such as a username or password to a server as part of a signing process. This has limitation in that the credentials can be harvested or tampered with as described above (man-in-the-middle attacks) - and does not prove the identity of the user as if the credentials are known they can be utilised by any person from any location on any supported device.

Another drawback of HTTPS is that it slows down communications which becomes noticeable on low bandwidth/high latency devices such as mobile phones operating with a low cellular network reception.

WO99/21321 discloses a digital certification method in which a user system sends a signature to a trusted certification server and then, during a purchasing transaction, sends the signature to a merchant system which then checks the signature with the certification server. US8 477 941 discloses method of maintaining secure communication as a mobile device moves between networks. US6230269 discloses an authentication system for a distributed network having multiple clients and a server.

### Summary of the Invention

The present invention provides a communication system comprising a client module arranged to run on a client device, a server module and an authorisation module, wherein: the client module is arranged to generate a signature, wherein the signature is at least partly dependent on a personal identification code associated with a user, a device identification code associated with the client device, and a transaction identity, wherein the client module is arranged to transmit a first fragment of the signature to the server module and a second fragment of the signature to the authorisation module, and the server module is arranged, on receipt of said first fragment of the signature, to perform an authentication process to check the authenticity of the signature including sending the first fragment to the authorisation module, and the authorisation module is arranged to combine the two fragments of the signature and to perform a check on them to check the validity of the signature.

The client and server modules may be arranged to communicate with each other during a series of communications each having a respective communication ID; and the client module may be arranged for a communication to define a symmetric encryption process which is at least in part dependent on the communication ID, encrypt message data using the symmetric key, encrypt symmetric encryption data at least partly defining the symmetric encryption process using an asymmetric key, and transmit the encrypted message data and symmetric encryption data to the server module, and the server module may be arranged to decrypt the symmetric encryption data using an asymmetric key, define the symmetric encryption process using the symmetric encryption data, and decrypt the message data using the defined symmetric encryption process.

The symmetric encryption process may, for example, include an encryption algorithm or cipher, with a key and/or an initialisation vector which make it unique. The symmetric encryption data may identify one of a set of symmetric encryption processes or keys, or may comprise or identify an initialization vector for the symmetric encryption process, or a symmetric key of the symmetric encryption process.

The message data may be request data, and may at least partially encode a personal identification code associated with a user of a client device, or a device identification code associated with a client device, or an application identification code associated with an instance of an application on a client device.

The message data may comprise at least part of a signature and the server module may be arranged, on receipt of the message data, to perform an authentication process to check the authenticity of the signature.

The signature may include or encode at least one of: a personal identification code associated with a user of a client device, a device ID associated with a client device, and an application ID associated with an instance of an application on a client device.

As part of a registration process, which may be the communication, or may precede the communication, the client module may be arranged to issue a request for a user to supply a PIC to the client module. The client module may be arranged to download an asymmetric public key from the server module. It may comprise a transceiver module which may perform this operation. The download may be over a network. It may be arranged to store the public key in data store.

As a further part of the registration process, or to initiate a communication, the client module may be arranged to send a token request encrypted using the asymmetric public key to the server module, for example using a transceiver module, for example over a network. The server module may be arranged to receive the request, for example via its transceiver module, and to decrypt it using its private asymmetric key. It may create communication data, such as a communication ID, in the form of session data and may store that in a data store. The server module may encrypt the communication data with its asymmetric private key and may respond to said client over said network. The client module may decrypt the communication data using the asymmetric public key and may store communication data in its data store.

As a further part of the registration process, or to initiate a communication, the client module may generate symmetric keys, for example using a symmetric key and its symmetric module and may encrypt a server request using a symmetric key and its symmetric module. The client may send the server request to the server module, for example using its transceiver module, e.g. over a network. The server module may decrypt the server request using a symmetric key, and its symmetric module, and may store symmetric keys in its data store. The server may generate symmetric keys, for example using its symmetric module, and may store these in its data store, and may encrypt a server response with asymmetric key and symmetric key and may respond to the client, for example over said network. The client may decrypt data using the asymmetric key and symmetric key and may store the symmetric keys in its data store.

As part of the registration process or the communication, the client module may encrypt the message, which may be in the form of a server request comprising the personal identification code and messaging details using the asymmetric key and symmetric key. The client may send the message to the server module, for example using its transceiver module, e.g. over a network. The server module may decrypt the message using the asymmetric key and symmetric key and may store the personal identification code and messaging details in its data store. The server may regenerate session data as the registration is now complete. The server may generate a signing key pair, for example using its signature validation module, and may store the validation key in its data store. The server may encrypt a server response, which may be a response to the server request, comprising the new session data and signing key using the symmetric key and may respond to the client, for example over the network. The client may decrypt the data using the symmetric key and may store the new session data and signing key, for example in its data store.

To initiate a financial transaction, the client module may encrypt a server request comprising transaction data using the asymmetric key, the symmetric key and the personal identification code. The transaction data may be signed, for example using the signature generation module. The client may send the server request to the server module, e.g. using its transceiver module, e.g. over the network. The server module may decrypt the server request using the asymmetric key and the symmetric key and may validate the signature portion of the request, for example using its signature validation module. The server may execute the request and may encrypt a server response comprising the request result using the symmetric key and may respond to the client, e.g. over said network. The client may decrypt the data using the symmetric key.

The transaction response may include regenerated session data.

The server module may generate a challenge request that may be encrypted using the symmetric key and transmitted to the server module, for example over an alternative/challenge network, for example by a challenge module. The client may receive the challenge, e.g. via a challenge receiver and function according to defined logic.

Some embodiments of the present invention use multiple cipher technologies securing client-to-server, and server-to-client communications in a proprietary fashion which defeats man-in-the-middle attacks, work fast over high latency networks, and provide 100% authenticity of the originator of the data through a secure bonding process.
Additionally some embodiments of the present invention provide secure tokenisation of sensitive information such as payment details allowing the client to submit payment over public networks without transmitting any information that could be used fraudulently; data fields such as a payment card PAN are preferably never stored on the client device or transmitted after first registration.

Additionally some embodiments of the present invention provide a challenge mechanic whereby the server can send either a silent or visible challenge to the client using a second channel. For example this channel could be Google Cloud Messaging (GCM) for Android based mobile devices or Apple Push Notification (APN) for mobile devices running iOS. The cloud messaging address would have been supplied as part of the secure bonding process. A silent challenge would be automatically replied to by the client module. A visible challenge would require user input. The server would then validate this response to complete authentication of the transaction. The challenge is not limited to cloud messaging. Other communications methods could be used where cloud messaging is not available such as SMS, sockets etc.

The system may further comprise any one or more features, in any combination, of the embodiments of the invention which will now be described by way of example only with reference to the accompanying drawings, in which:
**Figure 1** is a schematic diagram of a communications system according to a first embodiment of the invention;
**Figure 2** is a flow diagram showing steps in the registration of the client with the sever in the system of Figure 1;

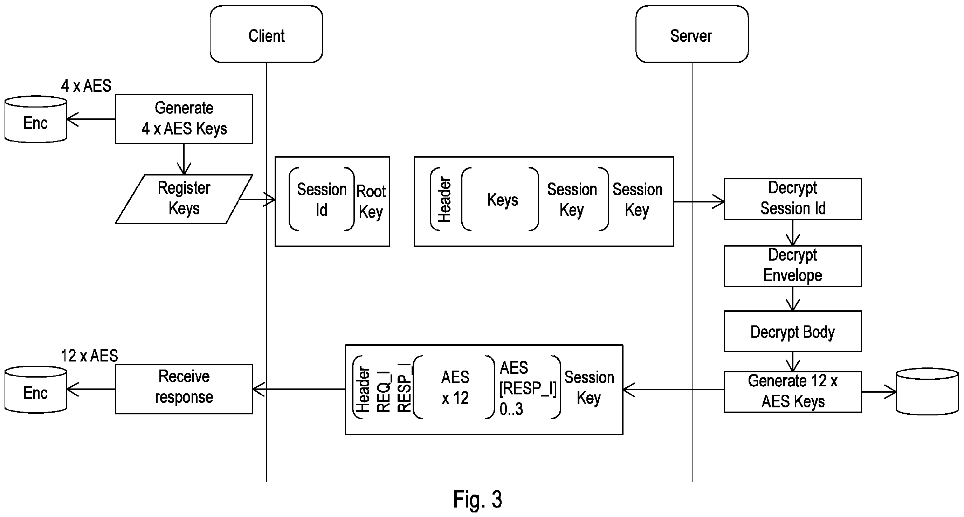

**Figure 3** is a flow diagram showing further steps in the registration of the client with the sever in the system of Figure 1;

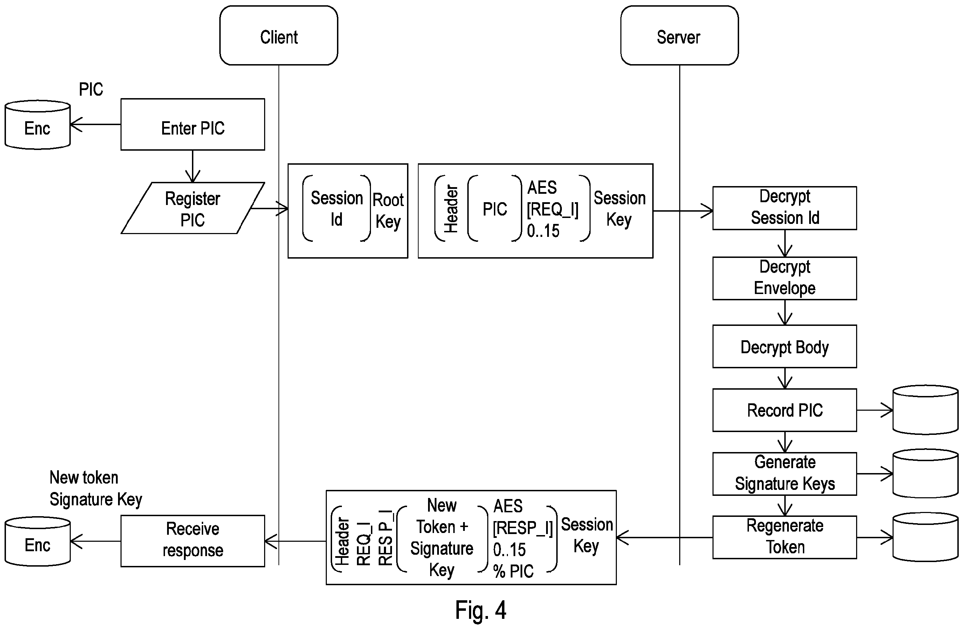

**Figure 4** is a flow diagram showing further steps in the registration of the client with the sever in the system of Figure 1;

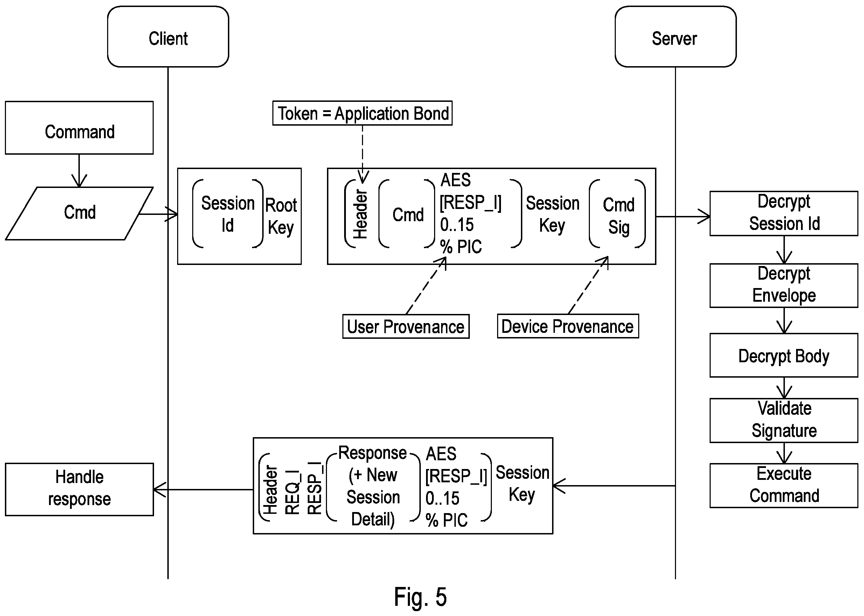

**Figure 5** is a flow diagram showing steps in a communication between the client with the sever in the system of Figure 1;
**Figure 6** is a schematic diagram of a system according to a further embodiment of the invention;
**Figure 7** is a schematic diagram of a modification to the system of Figure 6; and
**Figure 8** is a schematic diagram of the stack of the system of Figure 6.

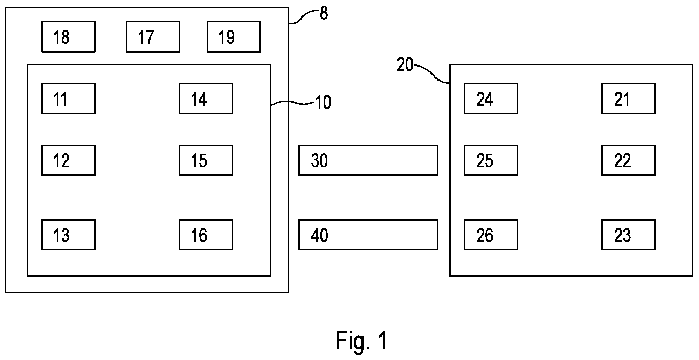

Referring to Figure 1, a secure communications system comprises a secure client communications module 10; and a secure server communications module 20. The client module is typically in the form of software running on a client device 8 which may be in the form of a mobile phone or tablet having a processor 18 arranged to run a number of software applications and modules stored in memory, and a display screen 19. The client module 10 comprises an asymmetric encryption and decryption module 11, symmetric encryption and decryption module 12, signature generation module 13, data store 14, transceiver module 15 and challenge receiver 16. The secure server communications module is a software module running on a server and comprises an asymmetric encryption and decryption module 21, a symmetric encryption and decryption module 22, a signature validation module 23, a data store 24, a transceiver module 25 and a challenge transmitter 40.

### Registration

Before registration communications begin, the client module 10 asks the user, for example by displaying a request on a screen of the client device 8, to enter a password or PIN (a personal identification code or PIC) that will be used to secure all future transactions. After the user has confirmed their PIC the following registration steps are performed. It will be appreciate that while this embodiment includes all of these steps, in other embodiments one or more of these steps, or individual actions within each of the main steps, may be omitted or modified.

### Step 1 - registration token, session ID, session key

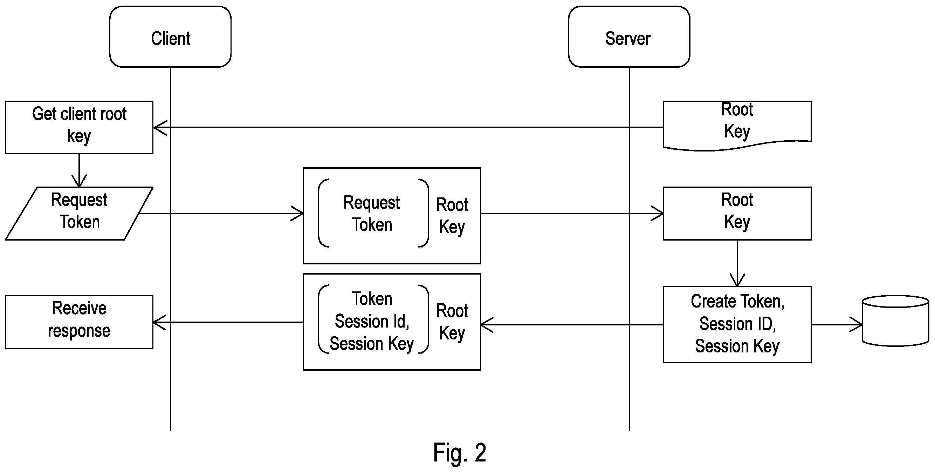

Referring to Figure 2, the client 10 downloads the public key, or root key, from an asymmetric keys pair from the server 20 over the network 30.

The client 10 creates a registration request message and encrypts this with the public key.

The client 10 sends this request to the server 20, for example over HTTP or HTTPs. The server 20 decrypts the request using the private key from the asymmetric key pair and creates a registration token, session Id (which includes a device ID unique to the client device, an application ID unique to the application running on the client, and a session index which is unique to the session and therefore changes with each communication session between the client and the server) and session key. The session key is a cryptographically generated symmetric key.

The registration token, session Id and session key are encrypted using the private key and the encrypted data is sent as the response.

The client 10 receives the response, decrypts it using the public key and securely stores the data in an encrypted local data store 14. The local store 14 is encrypted by a number of factors including keys that are in part derived from the PIC.

### Step 2 - exchange and indexing of symmetric keys

The client 10 cryptographically generates a number of symmetric keys and securely stores them in the local store 14. In this embodiment the client will generate 4 keys, but the number is flexible.

The client 10 encrypts the stored session Id with the public key.

The client 10 encrypts the generated symmetric keys with the session key.

The encrypted symmetric key data is then added to a request envelope which includes command information.

The request envelope is encrypted with the session key.

The encrypted session and encrypted request is sent to the server 20.

The server 20 decrypts the session Id using the asymmetric key, and decrypts the request using the session key, and decrypts the body using the session key. It should be noted that all of the keys described, apart from the root public/private key pair, have a one-to-one relationship with the client.

The server 20 cryptographically generates a number of symmetric keys. In this embodiment the server will generate 12 keys bringing the total of symmetric keys for this client to 16, but the number is flexible.

The server 20 selects one of the initial (i.e. 4) symmetric keys (according to a response index which changes with each response) and encrypts the newly generated (i.e. 12) symmetric keys with the selected key.

The server selects one of the available (i.e. 16) symmetric keys (according to a request index which changes with each request received).

The server 20 creates a response envelope and includes within it the request index, the response index and the encrypted symmetric keys.

The response envelope is encrypted with the session key and sent as the response.

The client 10 receives the response and decrypts the response envelope using the session key. Note the session key has not been retransmitted.

The client 10 decrypts the envelope data using the symmetric key identified by the response index and remembers the request index for its next transmission.

The client stores the decrypted symmetric keys.

### Step 3 PIC registration and asymmetric signature key generation

The client encrypts the session Id with the public key.

The client creates a request envelope by creating a request body comprising data, in this case the PIC entered by the user and registration data such as the messaging address to be used for challenges (e.g. Google GCM registration Id), and then encrypting the request body using the symmetric key identified by the request index from the previous transmission.

The request envelope is then encrypted using the session key.

The encrypted session and encrypted request is sent to the server.

The server decrypts the session Id using its private key, and decrypts the request using the session key, and decrypts the body of the request using the symmetric key identified by the request index from the previous transmission, to obtain the PIC and registration data.

The server 20 records the PIC and the registration data, including the messaging address data.

The server 20 generates an asymmetric key pair to be used for signing. The server saves the public part of the key pair in its data store 24.

The server 20 generates a new token, session Id and session key.

The server 20 selects a new response and request index and saves the request index.

The server 20 encrypts the private part of the asymmetric signing key pair, the new token, session Id and session key with the symmetric key identified by the response index. However, the symmetric key selected is now adapted by the PIC using a secret key adaptation algorithm shared between the client and the server. This algorithm can take many forms, but is shared between the client and the server once and not communicated as part of the communication session.

The server 20 replaces the current token, session Id and session key stored in its data store 24 with those newly generated. These will be used when handling the next transmission from the client.

The server 20 creates a response envelope and includes the new request index, response index and encrypted data (the private part of the asymmetric signing key pair, the new token, session Id and session key).

The response envelope is encrypted with the session key and sent as the response by the server 20.

The client 10 receives the response and decrypts the response envelope using the session key.

The client decrypts the envelope data (the private part of the asymmetric signing key pair, the new token, session Id and session key) using the symmetric key identified by the response index. The symmetric key selected is now adapted by the PIC using the secret key adaptation algorithm shared between the client and the server.

The client remembers the request index for its next transmission, saves the signature key and refreshes its token, session Id and session key.

The client is then registered and securely bonded to the server.

### Transaction

During a transaction the client 10 will use all the security elements to encrypt data and prove that the transaction originated from that client. These security elements include the user's PIC, the public key, the session Id, the session key, the symmetric key set and the signature key.

A transaction can be described as a number of steps which are set out below. It will be appreciate that while this embodiment includes all of these steps, in other embodiments one or more of these steps may be omitted or modified.

The client 10 encrypts the session Id with the public key.

The client 10 creates the request data comprising the command and data to be sent. Using the signature key the client creates a digital signature of the request data.

The request data is also encrypted by the client 10 using the symmetric key identified by the request index from the previous transmission. The symmetric key selected is now adapted by the PIC using the secret algorithm shared between the client and the server.

A request envelope is created by the client 10 including an application token, which acts as an identifier unique to the application running on the client device, and the encrypted data.

The request envelope is then encrypted by the client 10 using the session key.

The resulting encrypted data is concatenated with the result of the signing process (i.e. the digital signature) by the client 10.

The encrypted session and encrypted/signed request is sent to the server 20 by the client 10.

The server 20 decrypts the session Id using its private key, decrypts the request using the session key and decrypts the body (request data) using the symmetric key identified by the request index from the previous transmission. In the case of the body the key is adapted by the PIC. Note that the PIC has not been transmitted and will never be transmitted by the client 10 unless a PIC change transaction is made.

The server 20 validates the signature portion of the request against the decrypted data body.

If the session Id is decrypted and finds an application token, and this token also matches that in the decrypted request envelope, and the envelope data can be decrypted using the PIC adapted symmetric key, and digital signature is verified against the decrypted data then the transaction has been authenticated by the server and will be executed.

The response data to be returned to the client by the server includes the data returned from the execution of the request and may be augmented by a change of session Id and session key. If the session Id and/or session key are changed these will come into effect on the next transaction.

The server 20 selects a new response and request index and saves the request index. The server 20 encrypts the response data with the selected symmetric key adapted by the PIC.

The server 20 creates a response envelope and includes the request index, response index and encrypted response data.

The response envelope is encrypted with the session key and sent as the response.

### Challenges

The server 20 can send a challenge to the client using the registered challenge channel. This challenge can perform a number functions.

### Key Reset

If there is a communications failure and the client does not receive a transaction response then it is likely that the symmetric key indexes on the client are out of sync with those on the server. During transaction decryption/authentication the server can determine to send a reset challenge to the client comprising key synchronisation information. The client would silently apply this information enabling the client to continue communications.

### Card Verification Value (CVV) Challenge

In a payments scenario where the application on the client has securely bonded payment details and enabled one-step checkout, the server 20 or a downstream payments provider (e.g. acquirer, issuer or card scheme) could determine to send a CVV challenge. In this case the challenge would be displayed to the user on the client device 8 and the resulting CVV entry, input by the user via the input 17, would be sent to the server 2 to complete the transaction.

Naturally other challenges could be made based on any number of rules applicable to additional authentication or trust processes. These could include sending a kill command to erase all sensitive data from the device if it is lost or stolen.

### URI

A new scheme could be used to initiate m:Cypher transactions. This could for example be "httpm" to sit alongside "http" and "https". Using a scheme would enable m:Cypher to be used in a hardened web browser.

### Hardened Web Browser

A hardened web browser could use m:Cypher technology to secure data transmission with web page GET requests and responses passing between the m:Cypher client and server modules. The GET response would be assured free from cross-site scripting, code injection and other malicious attacks.

The embodiment described above has a number of advantages, in that it can:
remove the need to use HTTPS with its inherent speed and security issues;
defeat any man-in-the-middle attack;
provide provenance that the transaction originated from the device that performed the registration creating a secure device bond;
provide provenance that the transaction was authorised by the user;
provided the ability to securely store sensitive and non-sensitive data in an encrypted data store, which is sand-boxed to the application and can only be opened with user authorization; and
provided a secure, multi-channel challenge/authentication process.

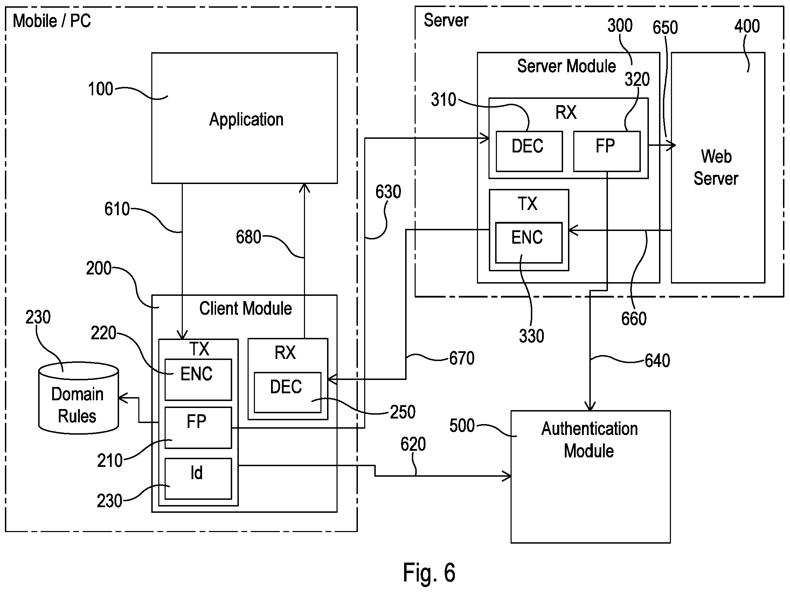

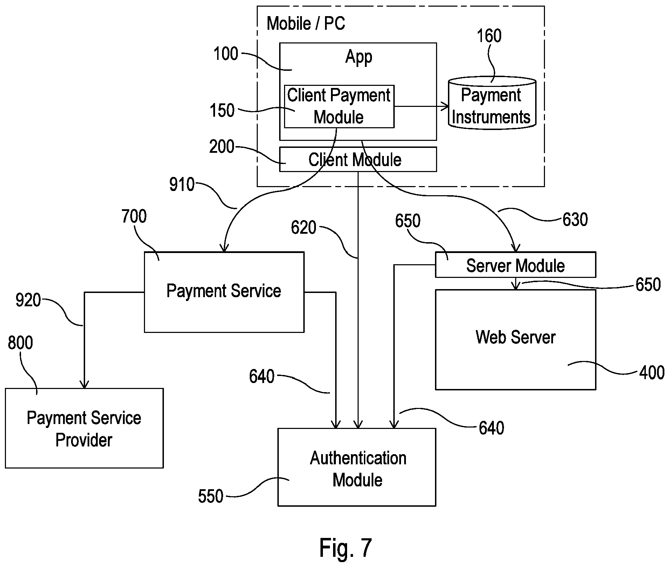

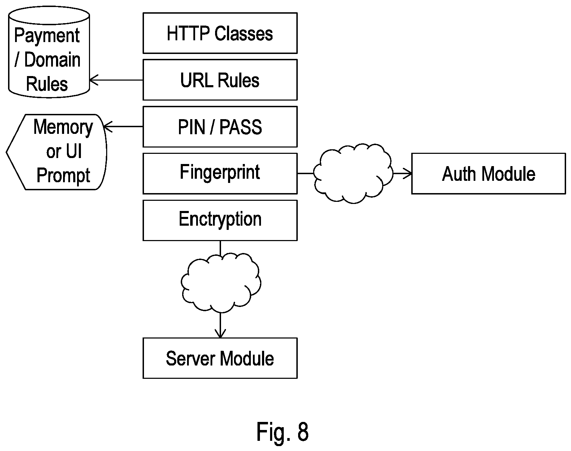

Referring to Figures 6 to 8, a communications system according to a second embodiment of the invention comprises three sub-systems: the client module 200, which operates on a client device 110 together with an application 100 which needs to communicate with a web server 400, a server module 300 typically running on the server along with web server software 400, and the authentication module 500 which is independent of the client and the server. The client module 200 comprises a fingerprint module 210, an encryption module 220, an ID module 230, which together form a transmission module TX for generating data for transmission, and a data store 240, and a decryption module 250 forming part of a reception module RX for receiving data. The server module 300 comprises a decryption module 310, a fingerprint module 320, which both form part of a reception module RX, and an encryption module 330 which forms part of a transmission module TX.

### Client Module

The application 100 is arranged to generate requests 610 for transmission to the web server 400. The requests are in HTTP(S) format, and therefore include POST data for transmission or GET parameters defining data being requested. The client module 200 is arranged to receive and adapt the HTTP(S) requests 610 from the application 100 by generating a digital fingerprint/signature 210 of the HTTP(S) request POST data or GET parameters using the fingerprint module 210 and encrypting the data body of a POST request or the parameters of a GET request, along with the HTTP headers of the request, with symmetric encryption using the encryption module 220.

The client module 200 may adapt HTTP(s) requests by means of extending HTTP classes that are used by an application or by means of acting as a proxy server between the client and the server. The rules used to determine the adaption are defined in a rules database 240.

The client module 200 generates the digital fingerprint using fingerprint module 210 from data related to the user and the device. An example of fingerprint generation is to use the serial number of the device and a user password in the creation of a symmetric (e.g. AES) key. The symmetric key could be generated by the serial number equating to the secret key and the user password equating to the algorithm initialisation vector. The POST data or GET parameters would be encrypted with this key and the resulting encrypted data hashed with a hashing algorithm such as SHA1.

The client module can encrypt the request using encryption module 220 by creating a one-time use symmetric key. The client module 200 generates a random symmetric (e.g. AES) key which is used to encrypt the POST data or GET parameters. The one-time use symmetric key is then encrypted with a known asymmetric public key, for which the server module 300 has stored the associated private key.

The client module 200 generates a globally unique Transaction Id for the HTTP(S) request using Transaction Id module 240 and transmits authentication message 620 comprising a part, e.g. one half, of the fingerprint/signature with the corresponding Transaction Id to the authentication module 500.

The client module 200 adds the remainder of the fingerprint/signature and the encrypted key as additional HTTP headers and transmits the adapted HTTP(S) request 630 to the server module 300.

Additional HTTP headers may be used to communicate varied encryption or fingerprint/signing mechanics or offer additional instructions to the server module or web server.

The resulting HTTP(S) request has been signed by the user and originating device, and encrypted with a one-time use password.

### Server Module

The server module 300 acts as a front end processor to the web server 400. Upon receipt of the adapted HTTP(s) request 630 it decrypts the request by means of the known private key using data in the received HTTP headers using decryption module 310.

The server module validates the authenticity and integrity of the transaction by requesting confirmation from the authentication module 500 by fingerprint module 320 by means of sending an authentication request 40 comprising the unique transaction Id and fingerprint/signature fragment read from the appropriate HTTP headers and the decrypted data.

Depending on the result of the confirmation request to the authentication module the server module will perform one of the following actions appropriate to the authentication result:
- Return an error code to the client module 200. Forward the request 650 to the web server 400 with an authentication code header
- Forward the request 650 to the web server 400 with a warning code header

### Authentication Module

The authentication module 500 performs two main functions; receives fingerprint/signature fragments in the authentication message 620 from the client module 200, and receives fingerprint/signature authentication requests 640 from the server module 300.

The authentication module 500 is able to validate fingerprint/signature requests by combining the two fragments; first sent in the authentication message 620 from the client module 200 and the second by the authentication request 640 sent by the server module 300 and comparing to the result by means of the same encryption/hashing algorithm against the request data with known data associated to the client module. Such known data may have been provided during a registration process, for example in the same manner as described above for the first embodiment.

Additionally the response 660 from the web server to the client module may be encrypted using the same encryption mechanics described above by means of server encryption module 330 and returned as an encrypted response 670 to the client module 300.

The client decryption module 250 will decrypt the encrypted response and the client module 200 will return the unencrypted response 680 to the application 100.

This system can therefore:
- Validate that the transaction originated from the expected user
- Validate that the transaction originated from a registered device
- Ensure that the traffic cannot be intercepted and read by man-in-the-middle attacks
- Ensure that the traffic has not been manipulated or tampered with en-route between the client and the server web site
- Validate that the transaction can be trusted by a trust (authentication) service independent of the server
- Enable slow HTTPS transactions to be replaced by quicker encrypted transactions
- Provide robust point-to-point encryption
- Replace HTTPS with a new scheme called HTTPM

Furthermore the system may be extended with two additional modules; a client payment module and a server payment module. These modules may be used to provide secure authenticated payments utilising the core system.

### Client Payment Module

The client payment module 150 provides an interface to secure payment instrument registration and storage 160 containing stored payment instrument registration (wallet) data, and payment transaction requests 910 to a payment service 700. The client payment module 150 communicates payment requests 910 via the client module 200. The client payment module 150 recognises that payment request 910 is required to be routed to the server payment module 700. The client module 200 transmits the authentication message 620 to the authentication module 500 and transmits the signed and encrypted payment request 910 to the server payment module 700.

All other HTTP(S) requests are transmitted to the server module 300 and forwarded to web server 400 as described above.

### Payment Server Module

The payment server module 700 authenticates the payment request 910 with the authentication module 500 by means of authentication request 640 and upon successful validation will transmit formatted payment message 920 to the payment service provider 800.

### Description of Headers

In this embodiment a number of HTTP(S) headers are used, the names and functions of which are outlined below. Obviously the naming is arbitrary and can vary.

### X-MCYPHER-SIGN

This header is sent by the client application 100 to request that the client module 200 re-authenticate the user by means of PIN or password entry.

### X-MCYPHER-ENC

This header is sent by the client application 100 or the client module 200 to set whether the response from the server module requires encryption.

### X-MCYPHER-REG

This header is sent by the server module 300 to the web site 400 to identify the transaction as relating to a new user, i.e. when the transaction fingerprint/signature has already been authenticated by the authentication module 500, but does not originated from a user trusted by the web site 400.

### X-MCYPHER-KEY

This header is sent by the client module 200 to the server module 300, or the server module 300 to the client module 200 with the value of the encrypted symmetric key.

### X-MCYPHER-TX

This header is sent by the client module 200 to the server module 300 indicating the value of the unique transaction Id associated to the request. This transaction Id value is used as an initialisation vector for the symmetric encryption, so that encryption is specific to the transaction, and to provide means to validate the fingerprint/signature with the authentication module 500.

This header is also sent by the server module 300 to the client module 200 indicating the initialisation vector for the symmetric encryption.

### X-MCYPHER-FP

This header is sent by the client module 200 to the server module 300 containing the value of the fingerprint/signature fragment.

### X-MCYPHER-AUTH

This header is sent by the server module 300 to the web server 400 containing the result from the authentication module 500 of the fingerprint/signature authentication.

In one embodiment the application 100 (which could be a web browser) has embedded the client module 200 as a library. The modules (and the application and web server where appropriate) are each arranged to take the various steps described.

The application 100 generates a web service (or web page) request for transmission to the web server 400. The application 100 may request the client module 200 to force the user to enter their password by adapting the request by adding the X-MCYPHER-SIGN header. The application 100 may also force encryption of the response from the server module 300 by adding the X-MCYPHER-ENC header to the request. If these two headers are not present in the request then the client module 200 will determine the operation of signing and encryption by means of defined business rules or recorded data.

The request is then further adapted by client module 200 in the following ways:

### Generation of Transaction Id

The client module 200 generates a unique transaction identifier. The preferred method is to use a global unique identifier which results in a 128 bit number typically formatted as a hexadecimal string. The request is adapted by adding the X-MCYPHER-TX header containing the transaction Id.

### Generation of Fingerprint / Signature

The client module 200 generates a transaction fingerprint/signature which is derived from the client device Id, the transaction Id and the user PIC, and transmits a fragment of the fingerprint/signature to the authentication module 500, and returns the other fragment to be included in the X-MCYPHER-FP header sent to the server module 300 with the request. The pseudo code of the algorithm appears as:

```
 public static bool Fingerprint(string ClientId, string TransactionId, string Password,
       string Data, out string Fp1, out string Fp2)
{
       Fp1 = "";
        Fp2 = "";
        string key = Pad(SerialNumber(), 16, true);
        Password = Pad(Password, 16, true);
        byte[] enc = mCypher.ClientLib.Encryption.EncryptSymmetric(key, Password,
        Data);
        string fp = mCypher.ClientLib.Hash.GetSHA1(enc);
        Fp1 = fp.Substring(0, fp.Length / 2);
        Fp2 = fp.Substring(Fp1.Length);
        AuthService.Authentication authWebService = new AuthService.Authentication();
        return authWebService.LogTransaction(TransactionId, ClientId, Fp1, "");
}
```

### Encryption of Data

The client module 200 encrypts the data of the request (body if a POST or URL parameters if a GET) to be sent to the server module 300. To encrypt the data, the client module encrypts the data using the symmetric key using the transaction Id as an initialization vector, and encrypts the symmetric key and the transaction Id using the asymmetric key. The encryption algorithm returns the encrypted data and the encrypted key that will be included in the X-MCYPHER-KEY header sent to the server module 300.

The URL parameters or request body are replaced by their encrypted variants as appropriate to the request.

The pseudo code of the algorithm appears as:

```
 public static bool Encrypt(string TransactionId, string PublicKey, string Data,
       out string EncryptedData, out string EncryptedKey)
{
       // build public key
        AsymmetricKeyParameter pubKey =
        PublicKeyFactory.CreateKey(Utils.Hex.Decode(PublicKey));
        // generate a symmetric key
        string key = Encryption.GenerateRandomKey();
        // encrypt the data with symmetric
        byte[] enc = Encryption.EncnyptSymmetnic(key, Pad(TransactionId, 16, true),
        Data);
        // hex encode resulting data
        EncryptedData = Hex.Encode(enc);
        // encrypt the symmetric key with the public assymmetric
        EncryptedKey = Hex.Encode(Encryption.EncryptAsymmetric(pubKey,
        Encoding.UTF8.GetBytes(key)));
        return true;
}
```

### Adaption of Headers

The client module 200 will adapt the headers of the request that will be sent to server module 300. The headers that are adapted include the content length to reflect the length of the encrypted body and headers relating to the encryption and fingerprint/signature are added that may include but are not limited to:

```
 HeaderFields.Add("X-MCYPHER-FP", fingerprintFragment2);
 HeaderFields.Add("X-MCYPHER-KEY", encryptionKey);
 HeaderFields.Add("X-MCYPHER-TX", transactionId);
 HeaderFields.Add("X-MCYPHER-ENC", "YES");
```

The request is sent to the server module 300 which then validates the request before forwarding to the web server 400. The first stage to validating the request is to retrieve the required headers from the request.

```
 // m:cypher variables
 string fingerprint = context.Request.Headers["X-MCYPHER-FP"];
 string txId = context.Request.Headers["X-MCYPHER-TX"];
 string encKey = context.Request.Headers["X-MCYPHER-KEY"];
 string encResponse = context.Request.Headers["X-MCYPHER-ENC"];
```

### Decryption of Data

The server module 300 first decrypts any encrypted data to recover the original request. To do this the server module uses the asymmetric key to decrypt the symmetric key and the transaction Id, and then uses the symmetric key, with the transaction Id as an initialization vector, to decrypt the data. Using the encryption key retrieved from the header and the known private key the data can be decrypted using the following algorithm:

```
 public static bool Decrypt(string TransactionId, string PrivateKey, string
 EncryptedData,
       string EncryptedKey, out string Data)
{
       AsymmetricKeyParameter privKey =
       PrivateKeyFactory.CreateKey(Utils.Hex.Decode(PrivateKey));
        // decrypt encryption key
        byte[] key = Encryption.DecryptAsymmetric(privKey,
        Utils.Hex.Decode(EncryptedKey));
        // decrypt data
        byte[] data = Hex.Decode(EncryptedData);
        byte[] dec = Encryption.DecnyptSymmetnic(key,
        Encoding.UTF8.GetBytes(Pad(TransactionId,
              16, true)), data);
        Data = Encoding.UTF8.GetString(dec);
        return true;
}
```

### Validation of the Fingerprint/Signature

The server module 400 then requests validation of the fingerprint/signature with the authentication module 500. As part of this request it sends the fragment of the fingerprint/signature that it has received from the client module. The authentication can be represented as:

```
 // validate fingerprint
 AuthService.Authentication authenticationServer = new AuthService.Authentication();
 string authenticationCode;
 if (authenticationServer.Authenticate(txId, data, fingerprint, out authenticationCode)
       == AuthService.eAuthenticationResult.OK)
{
       authenticated = true;
}
```

The authentication module 500 recomputes the fingerprint/signature based on the known details, and data supplied by the server module 300 e.g. client device Id, application token and client PIC. The authentication module 500 recovers from its data store the fingerprint/signature fragment previously sent by the client module 200, concatenates that with the fragment sent by the server module 300 to generate the complete fingerprint/signature, and compares this with the recomputed fingerprint/signature. If the two match, then the transaction is authenticated, and the authentication module sends confirmation of the authentication to the server module 300. If they do not match, the authentication module sends notification to the server module 300 that authentication has failed.

This fingerprint/signature validation algorithm can be represented in the following pseudo code:

```
 [WebMethod]
 public Transaction.eAuthenticationResult Authenticate(string TransactionId, string
 Data,
       string Fingerprint, out string AuthCode)
{
       AuthCode = "";
       Guid merchantId = Guid.Empty;
        if (!ValidateCredentials("Authenticate", out merchantid))
        {
                     return Transaction.eAuthenticationResult.NotAuthorised;
}
        // get the transaction
        Transaction transaction = Transaction.GetById(new Guid(Transactionld));
        if (transaction == null)
        {
                     // create it with the data we have and return not found result
               Transaction.Create(new Guid(Transactionld), merchantId, Fingerprint);
               return Transaction.eAuthenticationResult.NotFound;
}
        // check the fingerprint
       string calc;
       string clientSerial;
       string clientPassword;
        // get serial number and password of client from encrypted database
       GetClientData(TransactionId, out clientSerial, out clientPassword);
        Transaction.eAuthenticationResult ret =
        Transaction.eAuthenticationResult.Invalid;
        if (mCypher.serverLib.Fingerprint.Validate(clientserial, clientPassword,
              transaction.Fingerprint1, Fingerprint, Data, out calc))
       {
              AuthCode = GenerateAuthCode();
               ret = Database.Transaction.eAuthenticationResult.OK;
}
        transaction.Update(new Guid(Transactionld), merchantId, Fingerprint, calc,
        Data,
              AuthCode, ret);
        return ret;
}
```

Once the server module 300 has received the response of the authentication request from the authentication module 500 it will forward the request to the web server 400 or return an error code to the client module 200 based on the result of the authentication and any defined business rules. The request to be forward may be adapted by adding the authentication result and authentication code returned from the authentication request in an additional X-MCYPHER-AUTH header.

If the request originates from a user/client that is not trusted by the web server 400 the server module 300 will further adapt the request before forwarding it to the web server 400 by adding a X-MCYPHER-REG header with a registration token that the web server 400 can later use to instruct the authentication module 500 that this user/client has a trusted relationship with the web server 400. The determination of trust is by means of a database record on the authentication server 500 joining a unique user/client identifier representing the instance of the client module 200 to the merchant/web server identifier representing the instance of the web server 400.

The server module 300 then waits for the response from the web server 400 to the request. Depending on defined business rules or an explicit request from the client module 200, such as by using a request header, the server module 300 may then encrypt the response back to the client module 200.

### Encrypting the Response

The server module 500 encrypts the response using the symmetric key with the transmission Id as the initialization vector and adapts the response by replacing the body with the encrypted data, adapting the content length header to reflect the new body length and adds headers related to the encryption key details.

The encryption algorithm can be represented in the following pseudo code:

```
 public static bool Encrypt(string TransactionId, string PrivateKey, string Data,
       out string EncryptedData, out string EncryptedKey)
{
       AsymmetricKeyParameter pubKey =
       PrivateKeyFactory.CreateKey(Hex.Decode(PrivateKey));
        // generate a symmetric key
        string key = Encryption.GenerateRandomKey();
        // encrypt the data with symmetric
        byte[] enc = Encryption.EncryptSymmetric(key, Pad(TransactionId, 16, true),
        Data);
        // hex encode resulting data
        EncryptedData = Hex.Encode(enc);
        // encrypt the symmetric key with the public assymmetric
        EncryptedKey = Hex.Encode(Encryption.EncryptAsymmetric(pubKey,
        Encoding.UTF8.GetBytes(key)));
        return true;
}
```

### Decrypting the Response

Upon receipt of the response from the server module 300 the client module 200 will check the headers to determine if the response has been encrypted. If the response has been encrypted the client module 200 will decrypt the appropriate portion of the response and replace that part of the response body with the decrypted data. The decryption algorithm can be represented in the following pseudo code.

```
 public static bool Decrypt(string TransactionId, string PublicKey, string
 EncryptedData,
       string EncryptedKey, out string Data)
{
       AsymmetricKeyParameter pubKey =
       PublicKeyFactory.CreateKey(Hex.Decode(PublicKey));
       // decrypt encryption key
        byte[] key = Encryption.DecryptAsymmetric(pubKey, Hex.Decode(EncryptedKey));
        // decrypt data
        byte[] data = Hex.Decode(EncryptedData);
        byte[] dec = Encryption.DecryptSymmetric(key,
        Encoding.UTF8.GetBytes(Pad(TransactionId, 16,
              true)), data);
        Data = Ericoding.UTF8.GetString(dec);
        return true;
}
```

### Forwarding the Response

The client module 200 will then adapt the content length header to reflect the new body length before forwarding the adapted response to the application 100.

### Registration and Trust

At the point any application 100 first uses the client module 200 it will create a unique client identifier and register this with the authentication module 500. The user will be prompted to enter their chosen password or PIC which will be encrypted along with the unique device identifier using the algorithms described above and sent to the authentication module 500. The authentication module 500 will securely store this information in a client record.

At this point the instance of the client module 100 on the client device has been registered with the authentication module 500 but has no trust associations with any web servers 400.

When a request to a web server 400 is received by the server module 300 and, the fingerprint/signature has been validated, but a trust association between the web server 400 and the client module 200 has not been determined, a one-time use registration token is created which is returned to the server module 300 so that it can be included in a X-MCYPHER-REG header to the web server 400.

The web server 400, upon appropriate authentication using defined business rules of the request, can use the registration token to instruct the authentication module 500 that the client module 200 is now trusted.

Subsequent requests from the application 100 to the web server 400 can now utilise reduced authentication mechanics as the trust, authenticity and integrity of the request is affirmed by client module 200, server module 300 and authentication module 500. Alternatively the web server 400 could send an invite request via the authentication module 500 to a known email address or mobile phone number. The authentication module 500 would generate an encrypted invitation data file according to a format and MIME type known to the client module 200. When the invitation data file is selected it would be opened within the client module 200 which would then start a registration process as defined by business rules.

### Business/Domain Rules

The business rules applicable to each web server 400, web site or web URL can be stored with the authentication module 500 either via a user interface component or a web service or other data interface.

The client module 200 can act responsive to these business rules when it is adapting requests received from the application 100.

Examples of business rules could include calls to a payment service requiring encryption and user authentication (password/PIN entry) for each request, transmission of sensitive information requiring point-to-point encryption of both the request and the response, and general data download requests just requiring encryption of the response.
The business rules and associated public keys may be synchronised between the authentication module 500 and the client module 200 local store based upon the domains/URLs used by the application 100.

In further embodiments the client module 200 is not embedded in the application 100 as a library. The client module instead operates as a web proxy adapting requests from multiple applications whether the application 100 is calling a web service on the web server 400 or the application is a web browser browsing web pages from the web server 400.

## Claims

1. A communication system comprising a client module (200) arranged to run on a client device, a server module (300) and an authorisation module (500), wherein: the client module is arranged to generate a signature, wherein the signature is at least partly dependent on a personal identification code associated with a user, a device identification code associated with the client device, and a transaction identifier, **characterized in that** the client module is arranged to transmit a first fragment of the signature to the server module and a second fragment of the signature to the authorisation module, and the server module is arranged, on receipt of said first fragment of the signature, to perform an authentication process to check the authenticity of the signature including sending the first fragment to the authorisation module, and the authorisation module is arranged to combine the two fragments of the signature and to perform a check on them to check the validity of the signature.

2. A system according to claim 1 wherein the client module (200) is arranged to send request data to the server module (300), wherein the request data includes the first fragment.

3. A system according to claim 2 wherein the server module is arranged, if the request data meets predetermined conditions, to transmit a command to the client module (200) to request user input of a personal identification code.

4. A system according to any preceding claim wherein the server module is arranged to send the first fragment to the authorisation module with other data.

5. A system according to claim 4 wherein the authorisation module is arranged to recompute the signature based on the other data sent by the server module and known details including at least one of a client device identity, an application token and a personal identification code of the client.

6. A system according to any preceding claim wherein the server module is arranged to forward the request to a web server or return an error code to the client module based on the result of the authentication process.

## Patentansprüche

1. Kommunikationssystem mit einem Client-Modul (200), das dafür ausgelegt ist, auf einer Client-Vorrichtung zu laufen, einem Servermodul (300) und einem Autorisierungsmodul (500), wobei: das Clientmodul dafür ausgelegt ist, eine Signatur zu erzeugen, wobei die Signatur mindestens teilweise von einem persönlichen Identifikationscode, der einem Benutzer zugeordnet ist, einem Vorrichtungsidentifikationscode, der der Client-Vorrichtung zugeordnet ist, und einer Transaktionskennung abhängig ist, **dadurch gekennzeichnet, dass** das Client-Modul dafür ausgelegt ist, ein erstes Fragment der Signatur zu dem Servermodul und ein zweites Fragment der Signatur zu dem Autorisierungsmodul zu senden; und das Servermodul dafür ausgelegt ist, bei Empfang des ersten Fragments der Signatur einen Authentifizierungsprozess auszuführen, um die Authentizität der Signatur zu prüfen, einschließlich Senden des ersten Fragments zu dem Autorisierungsmodul, und das Autorisierungsmodul dafür ausgelegt ist, die zwei Fragmente der Signatur zu kombinieren und eine Prüfung an ihnen auszuführen, um die Validität der Signatur zu prüfen.

2. System nach Anspruch 1, wobei das Client-Modul (200) dafür ausgelegt ist, Anforderungsdaten zu dem Servermodul (300) zu senden, wobei die Anforderungsdaten das erste Fragment umfassen.

3. System nach Anspruch 2, wobei das Servermodul dafür ausgelegt ist, wenn die Anforderungsdaten vorbestimmte Bedingungen erfüllen, einen Befehl zu dem Client-Modul (200) zu senden, um Benutzereingabe eines persönlichen Identifikationscodes anzufordern.

4. System nach einem der vorhergehenden Ansprüche, wobei das Servermodul dafür ausgelegt ist, das erste Fragment mit anderen Daten zu dem Autorisierungsmodul zu senden.

5. System nach Anspruch 4, wobei das Autorisierungsmodul dafür ausgelegt ist, die Signatur auf der Basis der durch das Servermodul gesendeten anderen Daten und bekannter Details, einschließlich einer Client-Vorrichtungsidentität und/oder eines Anwendungs-Tokens und/oder eines persönlichen Identifikationscodes des Clients, neu zu berechnen.

6. System nach einem der vorhergehenden Ansprüche, wobei das Servermodul dafür ausgelegt ist, auf der Basis des Ergebnisses des Authentifizierungsprozesses die Anforderung zu einem Webserver weiterzuleiten oder einen Fehlercode an das Client-Modul zurückzugeben.

## Revendications

1. Système de communication comprenant un module client (200) agencé pour s'exécuter sur un dispositif client, un module serveur (300) et un module d'autorisation (500), dans lequel : le module client est agencé pour générer une signature, la signature étant au moins partiellement dépendante d'un code d'identification personnel associé à un utilisateur, d'un code d'identification de dispositif associé au dispositif client, et d'un identifiant de transaction, **caractérisé en ce que** le module client est agencé pour transmettre un premier fragment de la signature au module serveur et un deuxième fragment de la signature au module d'autorisation, et le module serveur est agencé, à la réception dudit premier fragment de la signature, pour effectuer un processus d'authentification pour vérifier l'authenticité de la signature comportant l'envoi du premier fragment au module d'autorisation, et le module d'autorisation est agencé pour combiner les deux fragments de la signature et pour effectuer une vérification sur ceux-ci pour vérifier la validité de la signature.

2. Système selon la revendication 1 dans lequel le module client (200) est agencé pour envoyer des données de requête au module serveur (300), les données de requête comportant le premier fragment.

3. Système selon la revendication 2 dans lequel le module serveur est agencé, si les données de requête respectent des conditions prédéterminées, pour transmettre une commande au module client (200) pour demander la saisie par l'utilisateur d'un code d'identification personnel.

4. Système selon une quelconque revendication précédente dans lequel le module serveur est agencé pour envoyer le premier fragment au module d'autorisation avec d'autres données.

5. Système selon la revendication 4 dans lequel le module d'autorisation est agencé pour recalculer la signature sur la base des autres données envoyées par le module serveur et de détails connus dont au moins un élément parmi une identité de dispositif client, un jeton d'application et un code d'identification personnel du client.

6. Système selon une quelconque revendication précédente dans lequel le module serveur est agencé pour transférer la requête à un serveur Web ou retourner un code d'erreur au module client sur la base du résultat du processus d'authentification.
